# EUROPÄISCHE PATENTSCHRIFT

(11) **EP 1 299 657 B1**
(45) Veröffentlichungstag und Bekanntmachung des Hinweises auf die Patenterteilung: **09.04.2008**
(21) Anmeldenummer: 01960348.9
(22) Anmeldetag: 21.06.2001
(51) Int. Cl.: F16D 69/04

(54) **BREMSBACKE SOWIE VERFAHREN ZUR HERSTELLUNG EINER BREMSBACKE**
BRAKE SHOE AND METHOD FOR PRODUCING A BRAKE SHOE
MACHOIRE DE FREIN ET SON PROCEDE DE PRODUCTION

(30) Priorität: 13.07.2000 DE 10034210
(43) Veröffentlichungstag der Anmeldung: 09.04.2003
(73) Patentinhaber: TMD Friction GmbH, 51381 Leverkusen (DE)
(72) Erfinder: KURZ, Gerhard, 86179 Augsburg (DE); SCHNELL, Wilfried, 51789 Lindlar (DE); EICHNER, Georg, 85737 Ismaning (DE); HOFFRICHTER, Wolfgang, 51061 Köln (DE)
(74) Vertreter: Müller, Eckhard
(86) Internationale Anmeldenummer: PCT/EP2001/007028
(87) Internationale Veröffentlichungsnummer: WO 2002/006695

(56) Entgegenhaltungen:
- DE-U- 29 921 524
- FR-A- 1 392 681
- US-A- 6 032 767
- PATENT ABSTRACTS OF JAPAN vol. 1997, no. 07, 31. Juli 1997 (1997-07-31) -& JP 09 089016 A (SUMITOMO ELECTRIC IND LTD), 31. März 1997 (1997-03-31)

## Beschreibung

Die Erfindung betrifft eine Bremsbacke nach dem Oberbegriff des Anspruchs 1, sowie ein Verfahren zur Herstellung einer Bremsbacke nach dem Oberbegriff des Anspruchs 10.

Es ist bekannt, zwischen einer Trägerplatte und einem Reibbelag eine dämpfende Zwischenschicht anzuordnen. Diese Zwischenschicht weist beispielsweise eine gleichmäßige Schichtstärke von 3 mm auf. Mit Hilfe dieser Zwischenschicht kann beispielsweise der Reibbelag mit hoher Festigkeit auf die Trägerplatte verklebt werden.

Bei bekannten Bremsbelägen treten beim Bremsen unerwünschte Begleiterscheinungen auf, die vom Verschleißzustand der Bremsbacken abhängen. Beispielsweise ist bekannt, dass die Bremsbacken mit zunehmenden Verschleiß zu einer erhöhten Bremsgeräuschbildung beitragen, da die Reibbeläge mit zunehmenden Alter und Hitzebelastung härter werden und an Kompressibilität abnehmen. Dadurch können sich die Reibbeläge weniger an die Bremsscheiben anpassen, die sich unter Wärmeeinfluss geometrisch verändern können (z.B. Schirmbildung).

Die auftretenden Geräusche lassen sich wie folgt charakterisieren:

| | |
|---|---|
| Knautschen | (breitbandiges Geräusch: 200 Hz bis 8 kHz) |
| Quietschen | (1500 Hz bis 15 kHz) |
| Rubbeln | (20 Hz bis 100 Hz) |
| Brummen | (200 Hz bis 600 Hz), sowie wire-brush-Geräusche. |

Rubbeleffekte wie Lenkraddrehschwingungen und Bremspedalpulsieren sowie Brummen können mit zunehmendem Verschleißzustand zunehmen.

Gattungsgemäße DE 299 21 524 U1 beschreibt einen Bremsbelag mit einer Trägerplatte für einen Reibmaterialblock, wobei auf der Oberfläche der Trägerplatte mittels einwirkender Energie Materialerhöhungen hergestellt werden, um als Halterungsbett den Reibmaterialblock zu bilden. Eine gesonderte Zwischenschicht wird nicht verwendet.

Der Erfindung liegt die Aufgabe zugrunde, eine Bremsbacke zu schaffen, durch die die Geräuschentwicklung und die Schwingungsübertragung auf das Lenkrad oder das Bremspedal über die gesamte Lebensdauer der Bremsbacken konstant gering gehalten werden kann. Ferner soll ein Verfahren vorgeschlagen werden, mittels welchem die Herstellung einer solchen Bremsbacke ermöglicht wird.

Zur Lösung dieser Aufgabe dienen die Merkmale des Anspruchs 1, sowie des Anspruchs 10.

Die Erfindung sieht in vorteilhafter Weise vor, dass die Zwischenschicht auf der dem Reibbelag zugewandten Seite eine dreidimensionale Oberflächenstruktur aufweist, und dass der Reibbelag trägerplattenseitig an die Oberflächenkontur der Zwischenschicht angepasst ist. Mit einer derartigen Zwischenschicht soll die Steifigkeit des Bremsbelages in Radialrichtung und Tangentialrichtung des Bremsbelages relativ zur Bremsscheibe positiv beeinflusst werden, indem die Kompressibilität und die Dämpfung des Reibbelages beeinflusst werden. Auf diese Weise lassen sich die Bremsgeräusche und die Schwingungsübertragung auf das Lenkrad und das Bremspedal auf ein Mindestmaß reduzieren.

Gemäß der Erfindung ist ferner vorgesehen, dass die Zwischenschicht aus einem relativ zu dem Reibbelag weichen und in hohem Maße dämpfenden Material besteht. Mit Hilfe der dreidimensionalen Oberflächenstruktur kann man die Steifigkeits- und Dämpfungseigenschaften in weiten Bereichen einstellen, ohne das Reibmaterial zu verändern. Damit kann auch gleichzeitig das Reibverhalten und der Verschleiß positiv beeinflusst werden.

Ein weiteres Ziel besteht darin, die Kompressibilität, und damit die Flächenpressung in Axialrichtung zu beeinflussen. Die Beeinflussung der Kompressibilität führt zu einer hohen Dämpfung von Brumm-, Quietsch- und Knautschgeräuschen.

Bevorzugt soll der Reibbelag in tangentialer Richtung weich und elastisch gestaltet sein. Damit lässt sich die Tendenz zum Rubbeln reduzieren, wodurch Geräusche, Lenkraddrehschwingungen und das Pedalpulsieren verringert werden. Dabei kann der Reibbelag in radialer Richtung relativ steif sein.

Durch die dreidimensionale Oberflächenstruktur der Zwischenschicht wird auch der effektive Reibradius und die Wärmeeinleitung in die Bremsscheibe beeinflusst, wobei der Belag sich an die geometrischen Veränderungen der Bremsscheibe optimal anpassen kann.

Bei einem bevorzugten Ausführungsbeispiel ist vorgesehen, dass die dem Reibbelag zugewandte Oberflächenstruktur der Zwischenschicht Vorsprünge aufweist, die in den Reibbelag hineinragen.

Bei einem Ausführungsbeispiel kann vorgesehen sein, dass sich die Vorsprünge bis in die Oberfläche des Reibbelages erstrecken.

Die Vorsprünge können eine balkenförmige, kegelförmige oder sinusförmige Querschnittsform aufweisen.

Alternativ können die Vorsprünge auch eine zylindrische Form aufweisen. Die dreidimensionale Oberflächenstruktur der Zwischenschicht kann symmetrisch zu einer radialen Symmetrieachse der Trägerplatte ausgerichtet sein. Diese radiale Symmetrieachse bezieht sich auf die Drehachse des Rades bzw. der Bremsscheibe.

Bei einem alternativen Ausführungsbeispiel ist vorgesehen, dass die Vorsprünge relativ zu der radialen Symmetrieachse der Trägerplatte asymmetrisch angeordnet sind. Mit der symmetrischen oder asymmetrischen Anordnung der Vorsprünge der Zwischenschicht kann man die richtungsabhängige Steifigkeit des Reibbelages an unterschiedliche Anforderungen anpassen.

Bei einem Ausführungsbeispiel ist vorgesehen, dass die dem Reibbelag zugewandte Seite der Zwischenschicht relativ zu der Trägerplatte geneigt verläuft und eine keilförmige Zwischenschicht mit dreidimensionaler Oberflächenstruktur bildet.

Die keilförmige Ausrichtung der Oberflächenstruktur kann relativ zu einer radialen Symmetrieachse der Trägerplatte und/oder zu einer zu der Symmetrieachse orthogonalen, parallel zu der Trägerplatte verlaufenden Achse erfolgen.

Bei einem bevorzugten Verfahren zur Herstellung einer Bremsbacke ist vorgesehen, dass das Zwischenschichtmaterial in einem ersten Pressformschritt mit einer vorgegebenen dreidimensionalen Oberflächenstruktur zu einer Zwischenschicht gepresst wird, wobei in einem zweiten Schritt das Reibmaterial in die gleiche Pressform eingefüllt und der Reibbelag gemeinsam mit der vorgepressten Zwischenschicht und der Trägerplatte fertiggepresst wird.

Bei dem Verfahren zur Herstellung einer Bremsbacke kann vorgesehen sein, dass in einem ersten Schritt das Zwischenschichtmaterial in eine Form eingefüllt wird und mit einem vibrierenden oder rüttelnden Stempel mit einer vorgegebenen dreidimensionalen Oberflächenstruktur vorgeformt wird, ohne verpresst zu werden, wobei in einem zweiten Schritt das Reibmaterial für den Reibbelag zugegeben und vorgeformt wird, und dass in einem dritten Schritt das vorgeformte, aber noch nicht verpresste Zwischenschichtmaterial und das vorgeformte Reibmaterial gemeinsam in der Pressform in einem einzigen Pressformschritt unter Druck und Hitze auf der Trägerplatte fertiggepresst werden.

Bei einer weiteren alternativen Form des Verfahrens zur Herstellung einer Bremsbacke kann vorgesehen sein, dass in einem ersten Schritt das Zwischenschichtmaterial mit einer vorgegebenen dreidimensionalen Oberflächenstruktur zu einer Zwischenschicht vorgepresst wird, wobei in einem zweiten Schritt die Trägerplatte und die vorgefertigte, gepresste Zwischenschicht in eine Pressform eingelegt werden, in einem dritten Schritt Reibmaterial in die Pressform eingefüllt wird, und in einem vierten Schritt der Reibbelag unter Druck und Hitze auf der Trägerplatte fertiggepresst wird.

Die nachfolgenden alternativen Ausführungsformen des Verfahrens sind insbesondere dann anwendbar, wenn der Boden der Pressform von einem Pressstempel gebildet ist und die Trägerplatte das obere Ende der Pressform abschließt. In diesem Fall wird das Reibmaterial zuerst in die Pressform eingegeben.

So ist bei einer weiteren Variante des Verfahrens zur Herstellung einer Bremsbacke vorgesehen, dass in einem ersten Schritt das Reibmaterial in die Pressform eingefüllt wird und mit einer vorgegebenen dreidimensionalen Oberflächenstruktur vorgeformt wird, in einem zweiten Schritt das Zwischenschichtmaterial auf das vorgeformte Reibmaterial in der Pressform eingefüllt wird, und in einem dritten Schritt der Reibbelag durch gemeinsames Pressformen des vorgeformten Reibmaterials und des Zwischenschichtmaterials auf der Trägerplatte fertiggepresst wird.

Bei dem Verfahren zur Herstellung einer Bremsbacke kann vorgesehen sein, dass in einem ersten Pressformschritt das Zwischenschichtmaterial mit einer vorgepressten dreidimensionalen Oberflächenstruktur zu einer Zwischenschicht vorgepresst wird, in einem zweiten Schritt das Reibmaterial in die Pressform eingefüllt wird, in einem dritten Schritt die vorgepresste Zwischenschicht auf das Reibmaterial in der Pressform aufgelegt wird, und in einem vierten Schritt der Reibbelag durch gemeinsames Pressformen der vorgepressten Zwischenschicht und des Reibmaterials auf der Trägerplatte fertiggepresst wird.

Bei einer weiteren Variante des Verfahrens zur Herstellung einer Bremsbacke ist vorgesehen, dass in einem ersten Schritt das Reibmaterial mit einer vorgegebenen dreidimensionalen Oberflächenstruktur vorgepresst wird, in einem zweiten Schritt das vorgepresste Reibmaterial in eine Pressform eingelegt wird, in einem dritten Schritt das Zwischenschichtmaterial eingefüllt wird, und in einem vierten Schritt der Reibbelag durch gemeinsames Pressformen des vorgepressten Reibmaterials und des Zwischenschichtmaterials auf der Trägerplatte fertiggepresst wird.

Im folgenden werden unter Bezugnahme auf die Zeichnungen Ausführungsbeispiele der Erfindung näher erläutert:

Es zeigen:
- Fig. 1: ein erstes Ausführungsbeispiel einer Oberflächenstruktur der Zwischenschicht einer Bremsbacke,
- Fig. 2: ein zweites Ausführungsbeispiel,
- Fig. 3: einen Schnitt entlang der Linie III-III in Fig. 1,
- Fig. 4: ein drittes Ausführungsbeispiel in Seitenansicht,
- Fig. 5: einen Schnitt entlang der Linie V-V in Fig. 4,
- Fig. 6: ein Ausführungsbeispiel mit keilförmiger Oberflächenstruktur der Zwischenschicht,
- Fig. 7: ein weiteres Ausführungsbeispiel,
- Fig. 8: einen Schnitt entlang der Linie VIII-VIII in Fig. 7,
- Fig. 9: ein Ausführungsbeispiel mit einer asymmetrischen Anordnung der Oberflächenstruktur,
- Fig. 10: ein Ausführungsbeispiel mit symmetrischer Anordnung der Oberflächenstruktur relativ zu einer radialen Symmetrieachse der Bremsbacke, und
- Fig. 11: unterschiedliche Querschnittsformen der Vorsprünge der Zwischenschicht.

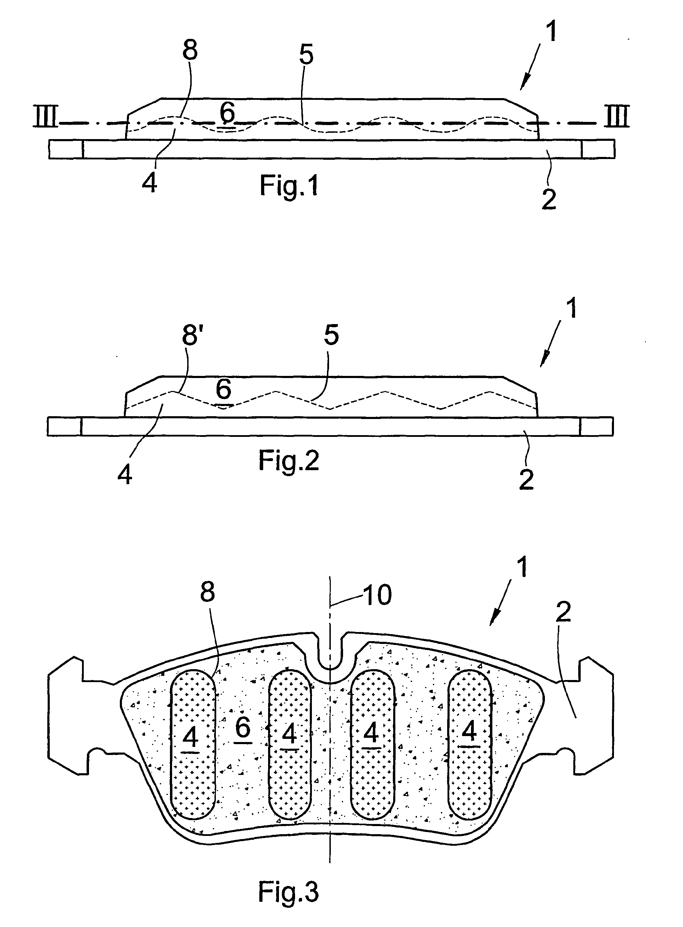

Das in Fig. 1 gezeigte erste Ausführungsbeispiel einer Bremsbacke 1 besteht aus einer Trägerplatte 2 aus Metall, auf die zunächst eine Zwischenschicht 4 aufgebracht ist, die als Dämpfungsschicht zwischen dem Reibbelag 6 und der Trägerplatte 2 dient.

Die Zwischenschicht 4 weist auf der dem Reibbelag 6 zugewandten Seite eine dreidimensionale Oberflächenstruktur 5 auf, die mit Vorsprüngen 8 versehen ist, die in den Reibbelag 6 eingreifen. Der Reibbelag 6 ist dementsprechend an die Oberflächenkontur 5 der Zwischenschicht 4 angepasst und besteht aus üblichem Reibmaterial.

In Fig. 1 ist die Oberflächenstruktur 5 der dem Reibbelag 6 zugewandten Seite der Zwischenschicht 4 durch die gestrichelte Linie angedeutet. Das Ausführungsbeispiel der Fig. 1 zeigt somit eine dreidimensionale Oberflächenstruktur der Zwischenschicht 4, die im Querschnitt eine Wellenform aufweist. Fig. 3 zeigt einen Schnitt entlang der Linie III-III in Fig. 1, aus dem erkennbar ist, dass die dreidimensionale Oberflächenstruktur 5 Vorsprünge 8 aufweist, die in den Reibbelag 6 vorstehen. Die in der Oberflächenstruktur 5 gebildeten Vorsprünge 8 sind in Fig. 3 in geschnittener Form dargestellt.

Mit Hilfe der dreidimensionalen Oberflächenstruktur 5 kann die Steifigkeit des Bremsbelages in Radialrichtung, sowie in Tangentialrichtung beeinflusst werden. Die Einlagerungen von Vorsprüngen 8, 8', 8", 8"' in den Reibbelag 6 ermöglicht es, die Kompressibilität und Dämpfung der Bremsbacke 1 über die gesamte Lebensdauer der Bremsbacken 1 konstant zu halten und damit die Geräuschentwicklung und die Schwingungsübertragung auf das Lenkrad oder das Bremspedal zu halten.

Desweiteren soll die Kompressibilität und Dämpfung auch in Axialrichtung positiv beeinflusst werden. Auf diese Weise lassen sich Bremsgeräusche wie Brummen, Quietschen oder Knautschen minimieren.

Fig. 2 zeigt ein zweites Ausführungsbeispiel einer Bremsbacke 1 mit einer Oberflächenstruktur 5, die im Querschnitt dach- oder prismenförmige Vorsprünge 8' aufweist.

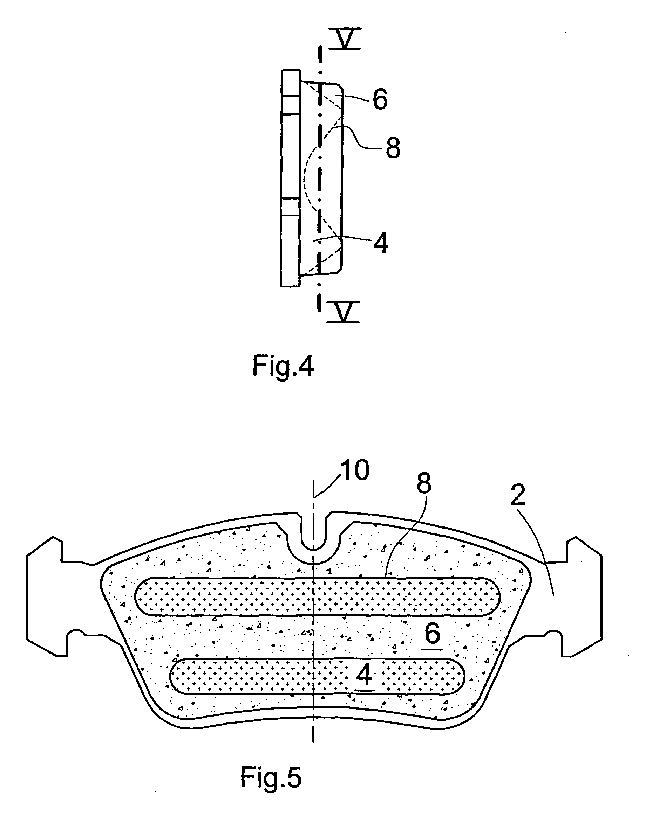

Fig. 4 zeigt ein drittes Ausführungsbeispiel mit im Querschnitt sinusförmigen oder dreieckförmig gestalteten Vorsprüngen 8, die sich im Gegensatz zu dem Ausführungsbeispiel der Fig. 3 quer zur radialen Symmetrieachse 10 der Bremsbacke 1 erstrecken. Dies ist am besten aus Fig. 5 ersichtlich, die einen Schnitt entlang der Linie V-V in Fig. 4 zeigt.

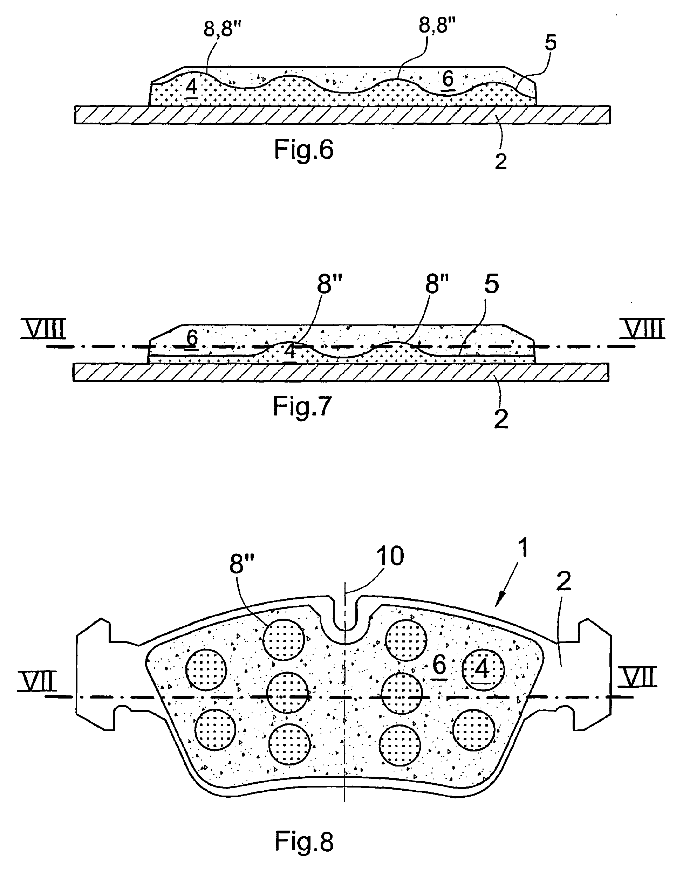

In Fig. 6 ist ein viertes Ausführungsbeispiel dargestellt, bei dem die Oberflächenstruktur 5 gegenüber der Trägerplatte 2 geneigt verläuft, so dass eine keilförmige Zwischenschicht 4 mit dreidimensionaler Oberflächenstruktur 5 gebildet ist.

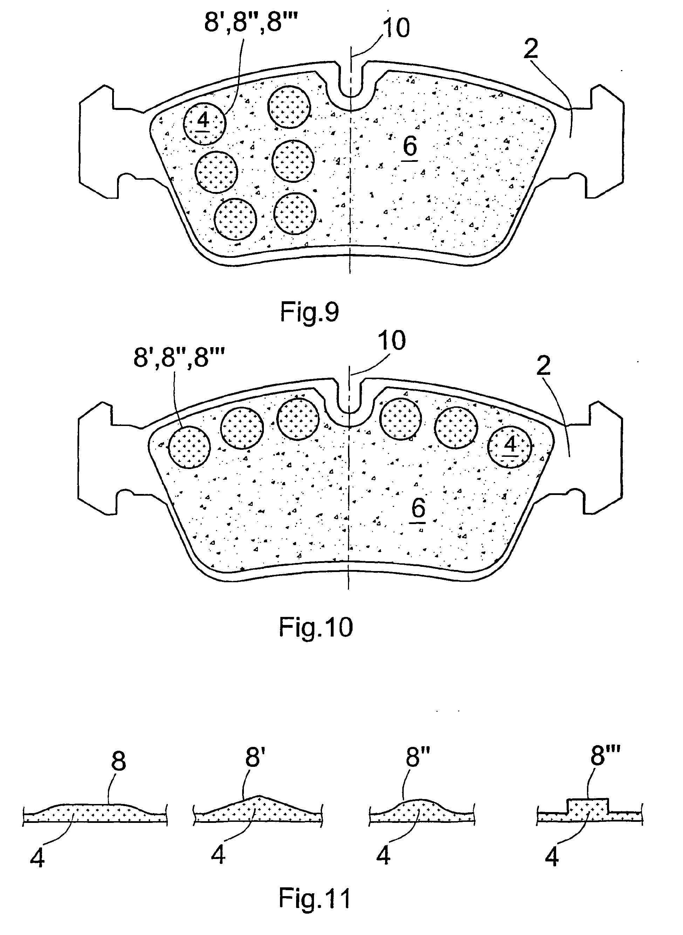

Die Vorsprünge der Oberflächenstruktur 5 können dabei alle in Fig. 11 gezeigten unterschiedlichen Querschnittsformen aufweisen. Die Oberflächenstruktur 5 kann um eine oder zwei Achsen geneigt sein. Beispielsweise kann die Neigung relativ zu der radialen Symmetrieachse 10 und/oder zu einer zu dieser Symmetrieachse 10 orthogonale und zu der Trägerplatte 2 parallele Achse eingestellt sein.

Das Ausführungsbeispiel der Fign. 7 und 8 zeigt eine Oberflächenstruktur 5 mit punktuellen Vorsprüngen 8''.

Fig. 7 ist ein Schnitt entlang der Linie VII-VII in Fig. 8 und Fig. 8 ist ein Schnitt entlang der Linie VIII-VIII in Fig. 7.

Das Ausführungsbeispiel der Fig. 9 zeigt eine asymmetrische Anordnung der Vorsprünge relativ zu der radialen Symmetrieachse 10. Das Anordnungsmuster von Vorsprüngen 8,8',8",8"' ist abhängig von dem individuellen Eigenschaften der Bremse und der Bremsscheibe hinsichtlich Konstruktion und Schwingungseigenschaften in Kombination mit dem Reibmaterial des Reibbelages.

Fig. 11 zeigt unterschiedliche Querschnittsformen der Vorsprünge 8,8',8",8"'. Die Vorsprünge 8 sind längliche, balkenförmige Vorsprünge, wie sie beispielsweise in den Fign. 3 oder 5 dargestellt sind, während die Vorsprünge 8',8" und 8"' punktuelle Vorsprünge zeigen.

Allerdings können die Querschnittsformen der Vorsprünge 8',8'',8''' auch Querschnitte durch balkenförmige Vorsprünge, wie in Fig. 2 ersichtlich, sein. Ein Schnitt durch das Ausführungsbeispiel der Fig. 2 mit dreieckförmiger Querschnittsstruktur der Vorsprünge 8' ergäbe ein ähnliches Schnittbild, wie Fig. 3.

Eine bevorzugte Zusammensetzung der Zwischenschicht 4 besteht aus:

| | |
|---|---|
| 0 - 40 Gew.% | Metalle |
| 10 - 60 Gew.% | Füllstoffe |
| 5 - 25 Gew.% | organische Zusatzstoffe |
| 0 - 10 Gew.% | organische/anorganische Fasern. |

Wesentlich ist, dass die Zwischenschicht als Bindeschicht keine Schmierstoffe enthält.

## Patentansprüche

1. Bremsbacke (1) mit einer Trägerplatte (2), auf der zunächst eine Zwischenschicht (4) und anschließend ein Reibbelag (6) angeordnet sind, **dadurch gekennzeichnet, dass** die Zwischenschicht (4) eine Bindeschicht aus einem relativ zu dem Reibbelag (6) weichen und in hohem Maße dämpfenden und geräuschreduzierenden Material ist und auf der dem Reibbelag (6) zugewandten Seite eine dreidimensionale Oberflächenstruktur aufweist, und dass der Reibbelag (6) trägerplattenseitig an die Oberflächenstruktur (5) der Zwischenschicht (4) angepasst ist.

2. Bremsbacke nach Anspruch 1, **dadurch gekennzeichnet, dass** die dem Reibbelag (6) zugewandten Oberflächenstruktur (5) der Zwischenschicht (4) Vorsprünge (8,8',8",8"') aufweist, die in den Reibbelag (6) eingreifen.

3. Bremsbacke nach Anspruch 2, **dadurch gekennzeichnet, dass** sich die Vorsprünge (8,8',8'',8''') bis in die äußere Oberfläche des Reibbelages (6) erstrecken.

4. Bremsbacke nach Anspruch 2 oder 3, **dadurch gekennzeichnet, dass** die Vorsprünge (8,8',8'',8''') eine balkenförmige, kegelförmige oder sinusförmige Querschnittsform aufweisen.

5. Bremsbacke nach einem der Ansprüche 2 oder 3, **dadurch gekennzeichnet, dass** die Vorsprünge (8"') eine zylindrische Form aufweisen.

6. Bremsbacke nach einem der Ansprüche 1 bis 5, **dadurch gekennzeichnet, dass** die dreidimensionale Oberflächenstruktur (5) der Zwischenschicht (4) symmetrisch zu einer radialen Symmetrieachse (10) der Trägerplatte (2) ausgerichtet ist.

7. Bremsbacke nach einem der Ansprüche 2 bis 6, **dadurch gekennzeichnet, dass** die Vorsprünge (8) relativ zu einer radialen Symmetrieachse (10) der Trägerplatte (2) asymmetrisch angeordnet sind.

8. Bremsbacke nach einem der Ansprüche 1 bis 7, **dadurch gekennzeichnet, dass** die dem Reibbelag (6) zugewandte Oberflächenstruktur (5) der Zwischenschicht (4) relativ zu der Trägerplatte (2) geneigt verläuft und eine keilförmige Zwischenschicht (4) bildet.

9. Bremsbacke nach Anspruch 8, **dadurch gekennzeichnet, dass** die dem Reibbelag (6) zugewandte Oberflächenstruktur (5) der Zwischenschicht (4) relativ zu einer radialen Symmetrieachse (10) der Trägerplatte (2) und/oder zu einer zu der Symmetrieachse (10) orthogonalen, parallel zu der Trägerplatte (2) verlaufenden Achse geneigt ist.

10. Verfahren zur Herstellung einer Bremsbacke (1), bei dem ein Reibmaterial und ein Zwischenschichtmaterial zwischen Reibmaterial und einer Trägerplatte (2) in eine Pressform eingefüllt wird und zu einem Reibbelag (6) auf der Trägerplatte (2) unter Druck und Hitze verpresst wird,
**dadurch gekennzeichnet,**
- **dass** in einem ersten Pressformschritt das Zwischenschichtmaterial mit einer vorgegebenen dreidimensionalen Oberflächenstruktur (5) zu einer Zwischenschicht (4) vorgepresst wird und mit dem in die Pressform eingefüllten Reibmaterial zusammengebracht wird, oder
- **dass** in einem ersten Schritt das Zwischenschichtmaterial mit einer vorgegebenen dreidimensionalen Oberflächenstruktur vorgeformt wird und in einem zweiten Schritt das Reibmaterial für den Reibbelag zugegeben und vorgeformt wird, oder
- **dass** in einem ersten Schritt vorgeformtes oder vorgepresstes Reibmaterial mit einer vorgegebenen dreidimensionalen Oberflächenstruktur auf der der Zwischenschicht zugewandten Seite mit Zwischenschichtmaterial in einer Pressform zusammengebracht werden; wobei durch gemeinsames Pressformen der Reibbelag (6) aus dem Reibmaterial und dem Zwischenschichtmaterial auf der Trägerplatte (2) fertiggepresst wird.

11. Verfahren nach Anspruch 10, **dadurch gekennzeichnet, dass** in einem ersten Pressformschritt das Zwischenschichtmaterial mit einer vorgegebenen dreidimensionalen Oberflächenstruktur (5) in der Pressform zu einer Zwischenschicht (4) vorgepresst wird, und dass in einem zweiten Schritt das Reibmaterial in die gleiche Pressform eingefüllt und der Reibbelag (6) gemeinsam mit der vorgepressten Zwischenschicht (4) und der Trägerplatte (2) fertiggepresst wird.

12. Verfahren nach Anspruch 10, **dadurch gekennzeichnet, dass**
- in einem ersten Schritt das Zwischenschichtmaterial in die Form eingefüllt wird und mit einem vibrierenden oder rüttelnden Stempel mit einer vorgegebenen dreidimensionalen Oberflächenstruktur (5) vorgeformt wird,
- in einem zweiten Schritt das Reibmaterial für den Reibbelag zugegeben und vorgeformt wird, und
- in einem dritten Schritt das vorgeformte, aber noch nicht verpresste Zwischenschichtmaterial und das vorgeformte Reibmaterial gemeinsam in der Pressform in einem einzigen Pressformschritt unter Druck und Hitze auf der Trägerplatte (2) fertiggepresst werden.

13. Verfahren nach Anspruch 10, **dadurch gekennzeichnet, dass**
- in einem ersten Schritt das Zwischenschichtmaterial mit einer vorgegebenen dreidimensionalen Oberflächenstruktur (5) zu einer Zwischenschicht (4) vorgepresst wird;
- in einem zweiten Schritt die Trägerplatte (2) und die vorgefertigte Zwischenschicht (4) in die Pressform eingelegt werden,
- in einem dritten Schritt Reibmaterial in die Pressform eingefüllt wird, und
- in einem vierten Schritt der Reibbelag (6) unter Druck und Hitze auf der Trägerplatte (2) fertiggepresst wird.

14. Verfahren nach Anspruch 10, **dadurch gekennzeichnet, dass**
- in einem ersten Schritt das Reibmaterial in die Pressform eingefüllt wird und mit einer vorgegebenen dreidimensionalen Oberflächenstruktur vorgeformt wird,
- in einem zweiten Schritt das Zwischenschichtmaterial auf das vorgeformte Reibmaterial in der Pressform eingefüllt wird, und
- in einem dritten Schritt der Reibbelag (6) durch gemeinsames Pressformen des vorgeformten Reibmaterials und des Zwischenschichtmaterials auf der Trägerplatte (2) fertiggepresst wird.

15. Verfahren nach Anspruch 10, **dadurch gekennzeichnet, dass**
- in einem ersten Pressformschritt das Zwischenschichtmaterial mit einer vorgepressten dreidimensionalen Oberflächenstruktur zu einer Zwischenschicht (4) vorgepresst wird,
- in einem zweiten Schritt das Reibmaterial in die Pressform eingefüllt wird,
- in einem dritten Schritt die vorgepresste Zwischenschicht auf das Reibmaterial in der Pressform aufgelegt wird, und
- in einem vierten Schritt der Reibbelag (6) durch gemeinsames Pressformen der vorgepressten Zwischenschicht und des Reibmaterials auf der Trägerplatte (2) fertiggepresst wird.

16. Verfahren nach Anspruch 10, **dadurch gekennzeichnet, dass**
- in einem ersten Schritt das Reibmaterial mit einer vorgegebenen dreidimensionalen Oberflächenstruktur vorgepresst wird,
- in einem zweiten Schritt das vorgepresste Reibmaterial in eine Pressform eingelegt wird,
- in einem dritten Schritt das Zwischenschichtmaterial eingefüllt wird, und
- in einem vierten Schritt der Reibbelag durch gemeinsames Pressformen des vorgepressten Reibmaterials und des Zwischenschichtmaterials auf der Trägerplatte fertiggepresst wird.

## Claims

1. Brake shoe (1) with a carrier plate (2) on which initially an intermediate layer (4) and subsequently a friction lining (6) are arranged, **characterised in that** the intermediate layer (4) is a binding layer of a material, which is soft by comparison with the friction lining (6) and which is damping and noise-reducing to a high extent, and has on the side facing the friction lining (6) a three-dimensional surface structure, and that the friction lining (6) is adapted on the carrier plate side to the surface structure (5) of the intermediate layer (4).

2. Brake shoe according to claim 1, **characterised in that** the surface structure (5), which faces the friction lining (6), of the intermediate layer (4) has projections (8, 8', 8", 8"') which engage in the friction lining (6).

3. Brake shoe according to claim 2, **characterised in that** the projections (8, 8', 8", 8"') extend as far as the outer surface of the friction lining (6).

4. Brake shoe according to claim 2 or 3, **characterised in that** the projections (8, 8', 8", 8"') have a bar-shaped, conical or sinusoidal cross-sectional shape.

5. Brake shoe according to one of claims 2 and 3, **characterised in that** the projections (8"') have a cylindrical shape.

6. Brake shoe according to one of claims 1 to 5, **characterised in that** the three-dimensional surface structure (5) of the intermediate layer (4) is oriented symmetrically with respect to a radial axis (10) of symmetry of the carrier plate (2).

7. Brake shoe according to one of claims 2 to 6, **characterised in that** the projections (8) are arranged asymmetrically relative to a radial axis (10) of symmetry of the carrier plate (2).

8. Brake shoe according to one of claims 1 to 7, **characterised in that** the surface structure (5), which faces the friction lining (6), of the intermediate layer (4) extends at an inclination relative to the carrier plate (2) and forms a wedge-shaped intermediate layer (4).

9. Brake shoe according to claim 8, **characterised in that** the surface structure (5), which faces the friction lining (6), of the intermediate layer (4) is inclined relative to a radial axis (10) of symmetry of the carrier plate (2) and/or relative to an axis which is orthogonal relative to the axis (10) of symmetry and extends parallel to the carrier plate (2).

10. Method of producing a brake shoe (1), in which a friction material and an intermediate layer material between friction material and a carrier plate (2) are filled into a press mould and pressed under pressure and heat to form a friction lining (6) on the carrier plate (2), **characterised in that**
- in a first press-moulding step the intermediate layer material is pre-pressed with a predetermined three-dimensional surface structure (5) to form an intermediate layer (4) and is brought together with the friction material filled into the press mould or
- in a first step the intermediate layer material is pre-shaped with a predetermined three-dimensional surface structure and in a second step the friction material for the friction lining is added and pre-shaped or
- in a first step pre-shaped or press-pressed friction material with a predetermined three-dimensional surface structure, on the side facing the intermediate layer is brought, together with intermediate layer material in a press mould, wherein through press-moulding in common the friction lining (6) of the friction material and the intermediate layer material are pressed to finished state on the carrier plate (2).

11. Method according to claim 10, **characterised in that** in a first press-moulding step the intermediate layer material is pre-pressed with a predetermined three-dimensional surface structure (5) in the press mould to form an intermediate layer (4) and that in a second step the friction material is filled into the same press mould and the friction lining (6) in common with the pre-pressed intermediate layer (4) and the carrier plate (2) is pressed to finished state.

12. Method according to claim 10, **characterised in that**
- in a first step the intermediate layer material is filled into the mould and is pre-shaped by a vibrating or shaking ram with a predetermined three-dimensional surface structure (5),
- in a second step the friction material for the friction lining is added and pre-shaped and
- in a third step the pre-shaped, but still not pressed intermediate layer material and the pre-shaped friction material are pressed in common to finished state in the press mould in a single press-moulding step under pressure and heat on the carrier plate (2).

13. Method according to claim 10, **characterised in that**
- in a first step the intermediate layer material is pre-pressed with a predetermined three-dimensional surface structure (5) to form an intermediate layer (4),
- in a second step the carrier plate (2) and the prefabricated intermediate layer (4) are placed in the press mould,
- in a third step friction material is filled into the press mould and
- in a fourth step the friction lining (6) is pressed to finished state under pressure and heat on the carrier plate (2).

14. Method according to claim 10, **characterised in that**
- in a first step the friction material is filled into the press mould and is pre-shaped with a predetermined three-dimensional surface structure,
- in a second step the intermediate layer material is filled onto the pre-shaped friction material in the press mould and
- in a third step the friction lining (6) is pressed to finished state by press-moulding in common of the pre-shaped friction material and the intermediate layer material on the carrier plate (2).

15. Method according to claim 10, **characterised in that**
- in a first press-moulding step the intermediate layer material is pre-pressed with a pre-pressed three-dimensional surface structure to form an intermediate layer (4),
- in a second step the friction material is filled into the press mould,
- in a third step the pre-pressed intermediate layer is placed on the friction material in the press mould and
- in a fourth step the friction lining (6) is pressed to finished state by press-moulding in common of the pre-pressed intermediate layer and the friction material on the carrier plate (2).

16. Method according to claim 10, **characterised in that**
- in a first step the friction material is pre-pressed with a predetermined three-dimensional surface structure,
- in a second step the pre-pressed friction material is placed in a press mould,
- in a third step the intermediate layer material is filled in and
- in a fourth step the friction lining is pressed to finished state by press-moulding in common of the pre-pressed friction material and the intermediate layer material on the carrier plate.

## Revendications

1. Mâchoire de frein (1) avec une plaque de support (2) sur laquelle sont disposées d'abord une couche intermédiaire (4) puis une garniture de friction (6), **caractérisée en ce que** la couche intermédiaire (4) est une couche de liaison en matériau souple par rapport à la garniture de friction (6) et très amortissant et réduisant le bruit, et présente sur le côté tourné vers la garniture de friction (6) une structure de surface tridimensionnelle, et **en ce que** la garniture de friction (6) est adaptée, du côté de la plaque de support, à la structure de surface (5) de la couche intermédiaire (4).

2. Mâchoire de frein selon la revendication 1, **caractérisée en ce que** la structure de surface (5), tournée vers la garniture de friction (6), de la couche intermédiaire (4) présente des saillies (8, 8', 8", 8"') qui mettent en prise la garniture de friction (6).

3. Mâchoire de frein selon la revendication 2, **caractérisée en ce que** les saillies (8, 8', 8", 8"') s'étendent jusque dans la surface extérieure de la garniture de friction (6).

4. Mâchoire de frein selon la revendication 2 ou 3, **caractérisée en ce que** les saillies (8, 8', 8", 8"') présentent une forme de section transversale de barre, de cône ou sinusoïdale.

5. Mâchoire de frein selon l'une quelconque des revendications 2 ou 3, **caractérisée en ce que** les saillies (8"') présentent une forme cylindrique.

6. Mâchoire de frein selon l'une quelconque des revendications 1 à 5, **caractérisée en ce que** la structure de surface tridimensionnelle (5) de la couche intermédiaire (4) est orientée de façon symétrique à un axe de symétrie radiale (10) de la plaque de support (2).

7. Mâchoire de frein selon l'une quelconque des revendications 2 à 6, **caractérisée en ce que** les saillies (8) sont disposées de façon asymétrique par rapport à un axe de symétrie radiale (10) de la plaque de support (2).

8. Mâchoire de frein selon l'une quelconque des revendications 1 à 7, **caractérisée en ce que** la structure de surface (5), tournée vers la garniture de friction (6), de la couche intermédiaire (4) s'étend de façon inclinée par rapport à la plaque de support (2) et forme une couche intermédiaire en forme de coin (4).

9. Mâchoire de frein selon la revendication 8, **caractérisée en ce que** la structure de surface (5), tournée vers la garniture de friction (6), de la couche intermédiaire (4) est inclinée par rapport à un axe de symétrie radiale (10) de la plaque de support (2) et/ou à un axe orthogonal à l'axe de symétrie (10), s'étendant parallèlement à la plaque de support (2).

10. Procédé de fabrication d'une mâchoire de frein (1), dans lequel on verse un matériau de friction et un matériau de couche intermédiaire entre le matériau de friction et une plaque de support (2) dans un moule, qui sont comprimés en une garniture de friction (6) sur la plaque de support (2) sous l'effet de la pression et de la chaleur,
**caractérisé**
- **en ce que** dans une première étape de moulage par pression, le matériau de couche intermédiaire est précomprimé avec une structure de surface tridimensionnelle prédéfinie (5) en une couche intermédiaire (4) et est réuni avec le matériau de friction versé dans le moule, ou
- **en ce que** dans une première étape, le matériau de couche intermédiaire est préformé avec une structure de surface tridimensionnelle prédéfinie, et dans une deuxième étape, le matériau de friction pour la garniture de friction est ajouté et préformé, ou
- **en ce que** dans une première étape, un matériau de friction préformé ou précomprimé avec une structure de surface tridimensionnelle prédéfinie est réuni, sur le côté tourné vers la couche intermédiaire, avec un matériau de couche intermédiaire dans un moule, dans lequel, par un moulage par pression commun, la garniture de friction (6) est définitivement moulée à partir du matériau de friction et du matériau de couche intermédiaire sur la plaque de support (2).

11. Procédé selon la revendication 10, **caractérisé en ce que** dans une première étape de moulage par pression, le matériau de couche intermédiaire avec une structure de surface tridimensionnelle prédéfinie (5) est précomprimé dans le moule en une couche intermédiaire (4), et **en ce que** dans une deuxième étape, le matériau de friction est versé dans le même moule et la garniture de friction (6) est définitivement moulée avec la couche intermédiaire précomprimée (4) et la plaque de support (2).

12. Procédé selon la revendication 10, **caractérisé en ce que**
- dans une première étape, le matériau de couche intermédiaire est versé dans le moule et est préformé avec une structure de surface tridimensionnelle prédéfinie (5) par une partie mâle de moule à vibrations ou à secousses,
- dans une deuxième étape, le matériau de friction pour la garniture de friction est ajouté et préformé, et
- dans une troisième étape, le matériau de couche intermédiaire préformé mais pas encore moulé et le matériau de friction préformé sont définitivement moulés sur la plaque de support (2) dans le moule dans une seule étape de moulage par pression sous l'effet de la pression et de la chaleur.

13. Procédé selon la revendication 10, **caractérisé en ce que**
- dans une première étape, le matériau de couche intermédiaire avec une structure de surface tridimensionnelle prédéfinie (5) est précomprimé en une couche intermédiaire (4),
- dans une deuxième étape, la plaque de support (2) et la couche intermédiaire préfabriquée (4) sont placées dans le moule,
- dans une troisième étape, le matériau de friction est versé dans le moule, et
- dans une quatrième étape, la garniture de friction (6) est définitivement moulée sur la plaque de support (2) sous l'effet de la pression et de la chaleur.

14. Procédé selon la revendication 10, **caractérisé en ce que**
- dans une première étape, le matériau de friction est versé dans le moule et préformé avec une structure de surface tridimensionnelle prédéfinie,
- dans une deuxième étape, le matériau de couche intermédiaire est versé sur le matériau de friction préformé dans le moule, et
- dans une troisième étape, la garniture de friction (6) est définitivement moulée sur la plaque de support (2) par un moulage par pression commun du matériau de friction préformé et du matériau de couche intermédiaire.

15. Procédé selon la revendication 10, **caractérisé en ce que**
- dans une première étape de moulage par pression, le matériau de couche intermédiaire avec une structure de surface tridimensionnelle précomprimée est précomprimé en une couche intermédiaire (4),
- dans une deuxième étape, le matériau de friction est versé dans le moule,
- dans une troisième étape, la couche intermédiaire précomprimée est posée sur le matériau de friction dans le moule, et
- dans une quatrième étape, la garniture de friction (6) est définitivement moulée sur la plaque de support (2) par un moulage par pression commun de la couche intermédiaire précomprimée et du matériau de friction.

16. Procédé selon la revendication 10, **caractérisé en ce que**
- dans une première étape, le matériau de friction avec une structure de surface tridimensionnelle prédéfinie est précomprimé,
- dans une deuxième étape, le matériau de friction précomprimé est placé dans un moule,
- dans une troisième étape, le matériau de couche intermédiaire est versé, et
- dans une quatrième étape, la garniture de friction est définitivement moulée sur la plaque de support par un moulage par pression commun du matériau de friction précomprimé et du matériau de couche intermédiaire.
